# EUROPEAN PATENT APPLICATION

(11) **EP 3 851 239 A1**
(43) Date of publication of application: **21.07.2021**
(21) Application number: 20275008.9
(22) Date of filing: 14.01.2020
(51) Int. Cl.: B23K 20/12

(54) **METHOD, PRODUCT AND APPARATUS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of friction-stir welding, FSW, a joint J, for example a T joint J, between a first workpiece W1 and a second workpiece W2 is described. The method comprises: arranging the first workpiece W1 and the second workpiece W2; performing a first pass P1 of FSW of the joint J by moving therealong a first tool 10, comprising a first probe 100 rotating in a first rotational direction RD1 and at least partially inserted into the first workpiece W1 and/or into the second workpiece W2 to a first depth D1, in a first movement direction MD1 defining a first line L1, on a first side S1 of the joint J, thereby providing a first welded region WR1; and performing a second pass P2 of FSW of the joint J by moving therealong a second tool 20, comprising a second probe 200 rotating in a second rotational direction RD2 and at least partially inserted into the first workpiece W1 and/or into the second workpiece W2 to a second depth D2, in a second movement direction MD2 defining a second line L2, on a second side S2 of the joint J, thereby providing a second welded region WR2; wherein the first tool 10 and the second tool 20 are mutually opposed; and wherein performing the first pass P1 of FSW and performing the second pass P2 of FSW are at least partially concurrent.

## Description

### Field

The present invention relates to a friction-stir welding.

### Background to the invention

Friction stir welding (FSW) (also known as stake friction stir welding and friction stir stake welding) is a solid-state joining process that uses a non-consumable rotating tool to join two facing workpieces without melting the workpieces. The rotating tool is in contact with the workpiece(s) and mechanical pressure is applied via the rotating tool onto the workpiece(s). Heat is thus generated by friction between the rotating tool and the workpiece(s), resulting in a softened region of material of the workpiece(s) proximal the rotating tool. As the rotating tool traverses along the joint between the workpieces, the rotating tool mechanically intermixes the hot and softened material of the workpieces and forges this material by the mechanical pressure applied by the rotating tool thereupon.

FSW may be associated with several advantages, including good mechanical properties of the weld in the as-welded condition, improved welding safety, reduced consumable usage, amenable to automation, suitable for welding in all positions (i.e. flat, horizontal, vertical, and overhead), good weld appearance, thinner joints and/or lower environmental impact.

However, FSW may also be associated with several disadvantages, including an exit hole where the rotating tool is withdrawn, the need for large forces for the applied mechanical pressure, less suitable for dissimilar workpiece thicknesses and/or non-linear welds, slower weld speeds and/or restricted to certain joint types and/or geometries.

Hence, there is a need to improve FSW.

### Summary of the Invention

It is one aim of the present invention, amongst others, to provide a method of friction-stir welding, a method of manufacturing a component, a friction-stir welded joint, a component and an apparatus for friction-stir welding a joint which at least partially obviates or mitigates at least some of the disadvantages of the prior art, whether identified herein or elsewhere. For instance, it is an aim of embodiments of the invention to provide a method of friction-stir welding that overcomes conventional restrictions to certain joint types and/or geometries. For instance, it is an aim of embodiments of the invention to provide a method of manufacturing a component that requires reduced support structures. For example, it is an aim of embodiments of the invention to provide a component comprising a friction-stir welded joint having improved mechanical properties. For example, it is an aim of embodiments of the invention to provide an apparatus for friction-stir welding a joint that provides improved friction-stir welding.

A first aspect provides a method of friction-stir welding, FSW, a joint, for example a T joint, between a first workpiece and a second workpiece, the method comprising:
arranging the first workpiece and the second workpiece;
performing a first pass of FSW of the joint by moving therealong a first tool, comprising a first probe rotating in a first rotational direction and at least partially inserted into the first workpiece and/or into the second workpiece to a first depth, in a first movement direction defining a first line, on a first side of the joint, thereby providing a first welded region; and
performing a second pass of FSW of the joint by moving therealong a second tool, comprising a second probe rotating in a second rotational direction and at least partially inserted into the first workpiece and/or into the second workpiece to a second depth, in a second movement direction defining a second line, on a second side of the joint, thereby providing a second welded region;
wherein the first tool and the second tool are mutually opposed; and
wherein performing the first pass of FSW and performing the second pass of FSW are at least partially concurrent.

A second aspect provides a method of manufacturing a component, preferably an aircraft component, comprising the method of friction-stir welding, FSW, a joint, for example a T joint and/or a lap joint, between a first workpiece and a second workpiece, according to the method of the first aspect.

A third aspect provides a friction-stir welded, FSW, joint, for example a T joint and/or a lap joint, between a first workpiece and a second workpiece, provided according to the method of the first aspect.

A fourth aspect provides a component, preferably an aircraft component, comprising a friction-stir welded, FSW, joint according to the third aspect.

A fifth aspect provides an apparatus for friction-stir welding, FSW, a joint, preferably a T joint, between a first workpiece and a second workpiece, the apparatus comprising:
a first tool, comprising a first probe rotatable in a first rotational direction and at least partially insertable into the first workpiece and/or into the second workpiece to a first depth, moveable in a first movement direction defining a first line, for performing a first pass of FSW of the joint by moving therealong thereby providing a first welded region; and
a second tool, comprising a second probe rotatable in a first rotational direction and at least partially insertable into the first workpiece and/or into the second workpiece to a second depth, moveable in a second movement direction defining a second line, for performing a second pass of FSW by moving therealong thereby providing a second welded region;
wherein the first tool and the second tool are mutually opposed; and
wherein the apparatus is configured to perform the first pass of FSW and to perform the second pass of FSW are at least partially concurrently.

A sixth aspect provides a friction stir welding, FSW, tool comprising a probe rotatable in a rotational direction, wherein the probe comprises a chamfered leading edge and/or a radiused trailing edge.

### Detailed Description of the Invention

According to the present invention there is provided a method of friction-stir welding, as set forth in the appended claims. Also provided is a method of manufacturing a component, a friction-stir welded joint, a component and an apparatus for friction-stir welding a joint. Other features of the invention will be apparent from the dependent claims, and the description that follows.

### Method of friction-stir welding

The first aspect provides a method of friction-stir welding, FSW, a joint, for example a T joint, between a first workpiece and a second workpiece, the method comprising:
arranging the first workpiece and the second workpiece;
performing a first pass of FSW of the joint by moving therealong a first tool, comprising a first probe rotating in a first rotational direction and at least partially inserted into the first workpiece and/or into the second workpiece to a first depth, in a first movement direction defining a first line, on a first side of the joint, thereby providing a first welded region; and
performing a second pass of FSW of the joint by moving therealong a second tool, comprising a second probe rotating in a second rotational direction and at least partially inserted into the first workpiece and/or into the second workpiece to a second depth, in a second movement direction defining a second line, on a second side of the joint, thereby providing a second welded region;
wherein the first tool and the second tool are mutually opposed; and
wherein performing the first pass of FSW and performing the second pass of FSW are at least partially concurrent.

That is, the first and second tools move together in tandem on either side of the joint, such that the first and second weld regions are being provided together, mutually proximally either side of the joint.

In this way, conventional restrictions to certain joint types and/or geometries are overcome. Particularly, since the first tool and the second tool are mutually opposed and since performing the first pass of FSW and performing the second pass of FSW are at least partially concurrent, the first side of the joint and the second side of the joint are welded at least partially concurrently by the mutually opposed tools. In this way, axial forces imposed by the mutually opposed tools to maintain respective shoulders at or below the respective surfaces of the workpieces are opposed. These opposed forces may balance, at least partially, and thereby reduce and/or eliminate a net force. In this way, support structures and/or clamping forces conventionally required to resist the forces imposed individually by the first tool or the second tool are reduced and/or eliminated.

In other words, the method according to the first aspect involves FSW the first workpiece, such as a stiffener, to the second workpiece, such as a skin, and doing so in manner that requires reduced or no support tooling whilst achieving a high quality of weld. The FSW may be performed simultaneously from each side of the stringer flange to produce an intersection double corner weld using a pair of stationary shoulder tools, for example, that will each provide support to the opposing side of the weld. In this way, there should not be any need for dedicated and expensive support tooling. As described below in more detail, a web of the stiffener may be located in a pre-machined slot in the (wing) skin, with the machined slot also optionally providing a chamfer feature that will be consumed during the welding process to form a fillet radius, behaving as a minimal stress concentrating feature.

### Friction stir welding

Generally, a rotating cylindrical tool, having a profiled probe pin, is fed (i.e. inserted) into a joint between two clamped workpieces, until the shoulder of the tool, which has a larger diameter than the pin, contacts the surface of the workpieces. The probe pin is slightly shorter than the weld depth required (i.e. the first depth and/or the second depth), when the tool shoulder contacts the surface of the workpieces. After a short dwell time to achieve the required heating, the rotating tool is moved forward along the joint line at a pre-set welding speed.

Frictional heat is generated between the rotating, moving tool and the workpieces. This heat, along with that generated by the mechanical mixing process and adiabatic heating within the material, causes the stirred materials to soften without melting. As the rotating tool is moved forward, a particular profile of the probe pin forces plasticised material from the leading face to the rear, where the high forces assist in forged consolidation of the weld.

This process of the rotating tool moving along the weld line in a plasticised tubular shaft of metal results in solid-state deformation of the workpieces, involving dynamic recrystallization of the materials.

In more detail, the rotating tool is pressed against the surface of two abutting or overlapping workpieces. The side of the weld for which the rotating tool moves in the same direction as the traversing direction, is commonly known as the 'advancing side'; the other side, where tool rotation opposes the traversing direction, is known as the 'retreating side'. An important feature of the tool is the probe (also known as a pin) which protrudes from the base of the tool (the shoulder) and is of a length only marginally less than the thickness of the workpieces. Frictional heat is generated, principally due to the high normal pressure and shearing action of the shoulder. Friction stir welding can be thought of as a process of constrained extrusion under the action of the tool. The frictional heating causes a softened zone of material to form around the probe. This softened material cannot escape as it is constrained by the tool shoulder. As the tool is traversed along the joint line, material is swept around the tool probe between the retreating side of the tool (where the local motion due to rotation opposes the forward motion) and the surrounding undeformed material. The extruded material is deposited to form a solid phase joint behind the tool. The process is by definition asymmetrical, as most of the deformed material is extruded past the retreating side of the tool. The process generates very high strains and strain rates, both of which are substantially higher than found in other solid state metalworking processes (extrusion, rolling, forging, etc.).

In conventional FSW (CFSW), the tool includes a rotating shoulder. The rotating shoulder adds a relatively large amount of heat to the surface, which in turn leads to a relatively wider heat affected zone (HAZ).

In stationary shoulder friction stir welding (SSFSW), the probe rotates and protrudes through a hole in a stationary shoulder/slide component. The stationary shoulder adds some heat to the surface (due to friction of the shoulder rubbing against the surface) but the majority of the heat is provided by the probe and the weld is made with an essentially linear heat input profile, which in turn leads to a relatively narrower HAZ. The key welding mechanism comprises a rotating pin running through a non-rotating (i.e. stationary) shoulder component, which slides over the surface of the material during welding. The weld surface is very smooth, almost polished, with no or minimal reduction in cross-section.

### Microstructure

The solid-state nature of FSW, combined with the particular shape and asymmetric speed profile of the rotating tool, results in a highly characteristic microstructure.

The microstructure can be divided up into the following zones:
The stir zone (also known as the dynamically recrystallised zone) is a region of heavily deformed material that approximately corresponds to the location of the probe pin during welding. The grains within the stir zone are roughly equiaxed and often an order of magnitude smaller than the grains in the parent material of the workpieces. A unique feature of the stir zone is the common occurrence of several concentric rings, which has been referred to as an "onion-ring" structure. The precise origin of these rings has not been firmly established, although variations in particle number density, grain size and texture have all been suggested.

The flow arm zone is on the upper surface of the weld and comprises material that is dragged by the shoulder from the retreating side of the weld, around the rear of the tool, and deposited on the advancing side.

The thermo-mechanically affected zone (TMAZ) occurs on either side of the stir zone. In this region, the strain and temperature are lower and the effect of welding on the micro-structure is correspondingly less. Unlike the stir zone, the microstructure is recognizably that of the parent material, albeit deformed and rotated. Although the term TMAZ refers to the entire deformed region, it is often used to describe any region not covered by the terms stir zone and flow arm.

The heat-affected zone (HAZ) is common to all welding processes. The HAZ is subjected to a thermal cycle but is not deformed during welding. The temperatures are lower than those in the TMAZ but may still have a significant effect if the micro-structure is thermally unstable. In age-hardened aluminium alloys, for example, this region commonly exhibits the poorest mechanical properties.

### Forces

During welding, multiple forces will act on the tool:
1. An axial force, with respect to the tool, is necessary to maintain the position of the tool shoulder at or below the material surface. Some friction-stir welding machines operate under load control, but in many cases the vertical position of the tool is preset, and so the load will vary during welding.
2. A transverse force acts parallel to the tool motion and is positive in the transverse direction. Since this force arises as a result of the resistance of the material to the motion of the tool, it might be expected that this force will decrease as the temperature of the material around the tool is increased.
3. A lateral force may act perpendicular to the tool traverse direction and is defined herein as positive towards the advancing side of the weld.
4. Torque is required to rotate the tool, the amount of which will depend on the axial force and friction coefficient (sliding friction) and/or the flow strength of the material in the surrounding region (stiction).

### Method of friction-stir welding

The method is of friction-stir welding, FSW, the joint, for example a T joint, between the first workpiece and the second workpiece. FSW is known. It should be understood that the joint mutually joins the first workpiece and the second workpiece. It should be understood that the first workpiece and the second workpiece are generally different workpieces i.e. before FSW. However, the method of FSW may be applied to a single workpiece, for example to provide welded regions therein having different properties, for example, compared with unwelded regions. This is generally known as "friction stir processing".

It should be understood that the joint is formed at an intersection between the first workpiece and the second workpiece. In one example, the joint comprises and/or is a square butt joint, an edge butt joint, a T butt joint, a lap joint, a multiple lap joint, a T lap joint or a fillet joint, preferably for example a T joint, a T butt joint or a T lap joint. In one example, a position of the FSW, for example of the first pass of FSW and/or of the second pass of FSW, is flat, horizontal, vertical, and/or overhead.

The method comprises arranging the first workpiece and the second workpiece. It should be understood that arranging the first workpiece and the second workpiece comprises physically placing the first workpiece and the second workpiece, for example according to a required joint setup. In one example, the method comprises providing the first workpiece and the second workpiece. In one example, providing the first workpiece comprises including, for example by casting, machining and/or additive manufacturing, a male member (such as a tongue) therein and/or providing the second workpiece comprises including, for example by casting, machining and/or additive manufacturing, a corresponding female member (such as a groove or rebate) therein. In this way, the first workpiece and the second workpiece are located relatively and this relative location may be maintained during the FSW, for example by the forces, such as the axial forces, applied by the first tool and the second tool on the first workpiece and/or the second workpiece. That is, the axial forces urge insertion of the male member into the female member and/or engagement between the male member and the female member. In this way, the arrangement of the first workpiece and the second workpiece is self-supporting. Furthermore, by varying a depth of the female member and the first depth and/or the second depth of the first probe and/or the second probe, respectively, a degree of penetration of the first welded region and/or the second welded region, respectively, in the first workpiece and/or the second workpiece may be controlled. In one example, providing the first workpiece comprises including, for example by casting, machining and/or additive manufacturing, a female member therein and/or providing the second workpiece comprises including, for example by casting, machining and/or additive manufacturing, a corresponding male member therein. In one example, arranging the first workpiece and the second workpiece comprises receiving the male member in the female member.

In one example the first workpiece comprises a male member and the second workpiece comprises a corresponding female member, or vice versa, and arranging the first workpiece and the second workpiece comprises receiving the male member in the female member.

The method comprises performing the first pass of FSW of the joint by moving therealong the first tool, comprising the first probe rotating in the first rotational direction and at least partially inserted into the first workpiece and/or into the second workpiece to the first depth, in the first movement direction defining the first line, on the first side of the joint. It should be understood that the first pass of FSW is an initial pass (also known as run) of the first side of the joint between the first workpiece and the second workpiece. It should be understood that the movement of the first tool is relative to the first workpiece and/or the second workpiece. For example, the first workpiece and the second workpiece may be static (i.e. stationary, not moving), such as fixedly clamped, and the first tool moves in the first movement direction, such as FSW of a lap joint between two plates. For example, the first workpiece and the second workpiece may move in the first movement direction, such as on a moving bed or on a rotator, and the first tool is static, such as FSW of a circumferential joint between two pipes. It should be understood that the first tool moves along the joint while the first probe is rotating, in the first movement direction. It should be understood that the first side of the joint is the side from which the first probe is inserted. For example, a lap joint or a multiple lap join may be FSW from the first side or an opposed second side, by inverting the workpieces. Generally, however, a T lap joint may only be welded from the first side, unless the second workpiece is relatively thin compared with the first depth.

In one example, the first rotational direction is clockwise or anticlockwise, as viewed from above the first tool. In one example, the first movement direction comprises and/or is a first translational direction. In one example, the first line is arcuate (i.e. a curved line) or linear (i.e. a straight line), preferably linear. In one example, the first line is substantially parallel, parallel, intersecting with and/or coincident with the joint, preferably coincident or parallel to the joint.

Performing the first pass of FSW provides the first welded region, on the first side of the joint. It should be understood that inserting the first probe results in a first entry hole, which is then 'healed' by the FSW as the first tool is moved in the first movement direction. It should be understood that at least partially inserting the first probe to the first depth is generally before the first probe begins moving in the first direction. It should be understood that the first depth is sufficient to provide the first welded region (i.e. of the joint between the first workpiece and the second workpiece) and thus depends, at least in part, on a thickness of the first workpiece, for example, as known by the skilled person. In one example, the first welded region extends along a first distance of the first line.

In one example, performing the first pass of FSW comprises inserting the first probe to the first depth, resulting in a first entry hole. In one example, the method comprises moving the first tool in the first movement direction from the first entry hole towards and/or to a first exit hole, for example at a first speed, for example while applying a first axial force.

In one example, performing the first pass of FSW comprises withdrawing at least partially the first probe. In one example, withdrawing at least partially the first probe comprises gradually, for example linearly as a function of distance and/or time, withdrawing at least partially the first probe. In one example, withdrawing at least partially the first probe comprises withdrawing the first probe by an amount of at least 50%, preferably at least 75%, more preferably at least 90% of the first depth. In one example, withdrawing at least partially the first probe comprises withdrawing the first probe from the first depth while moving the first tool in the first movement direction. In one example, performing the first pass of FSW comprises fully withdrawing the first probe, thereby resulting in the first exit hole. It should be understood that fully withdrawing the first probe is generally after the first probe has stopped moving in the first direction.

In one example, performing the first pass of FSW comprises inserting the first probe into the first workpiece, for example, to the first depth, resulting in a first entry hole, moving the first probe in the first movement direction, thereby providing the first welded region including 'healing' the first entry hole, and then fully withdrawing the first probe, thereby resulting in a first exit hole.

The method comprises performing the second pass of FSW of the joint by moving therealong the second tool, comprising the second probe rotating in the second rotational direction and at least partially inserted into the first workpiece and/or into the second workpiece to the second depth, in the second movement direction defining the second line, on the second side of the joint. It should be understood that the second pass of FSW is an initial pass (also known as run) of the second side of the joint between the first workpiece and the second workpiece, at least partially concurrent with the first pass of FSW. It should be understood that the movement of the second tool is relative to the first workpiece and/or the second workpiece, as described with respect to the first tool. It should be understood that the second tool moves along the joint while the second probe is rotating, in the second movement direction. It should be understood that the first side of the joint is the side from which the second probe and the first probe is inserted (i.e. the same side). In one example, the second line is substantially parallel, parallel, intersecting with and/or coincident with the joint, preferably coincident or parallel to the joint. In one example, the second line is substantially parallel, parallel, intersecting with and/or coincident with the first line, preferably parallel to the first line. In one example, the first line and the second line are mutually spaced apart.

Performing the second pass of FSW provides the second welded region, on the second side of the joint. It should be understood that inserting the second probe results in a second entry hole, which is then 'healed' by the FSW as the second tool is moved in the second movement direction. It should be understood that at least partially inserting the second probe to the second depth is generally before the second probe begins moving in the second direction. It should be understood that the second depth is sufficient to provide the second welded region (i.e. of the joint between the second workpiece and the second workpiece) and thus depends, at least in part, on a thickness of the second workpiece, for example, as known by the skilled person. In one example, the second welded region extends along a second distance of the second line.

In one example, the second rotational direction is clockwise or anticlockwise, as viewed from above the second tool. In one example, the second movement direction comprises and/or is a second translational direction. In one example, the second line is arcuate (i.e. a curved line) or linear (i.e. a straight line), preferably linear. In one example, the first rotational direction and the second rotational direction are the same rotational direction, for example both clockwise or both anticlockwise. In one example, the first rotational direction and the second rotational direction are mutually opposed, for example one clockwise and the other anticlockwise.

In one example, performing the second pass of FSW comprises inserting the second probe to the second depth, thereby providing the second welded region. It should be understood that inserting the second probe results in a second entry hole, which is then 'healed' by the FSW as the second tool is moved in the second movement direction. It should be understood that inserting the second probe to the second depth is generally before the second probe begins moving in the second direction. It should be understood that the second depth is sufficient to provide the second welded region (i.e. of the joint between the second workpiece and the second workpiece) and thus depends, at least in part, on a thickness of the first workpiece, for example, as known by the skilled person. In one example, the seconded welded region extends along a first distance of the second line. In one example, the first distance of the second line extends along, fully along and/or beyond the second distance of the first line.

In one example, inserting the second probe to the second depth results in a second entry hole. In one example, the method comprises moving the second tool in the second movement direction from the second entry hole towards and/or to a second exit hole, for example at a second speed, for example while applying a second axial force. In one example, the second speed is equal to the first speed.

In one example, performing the second pass of FSW comprises optionally withdrawing at least partially the second probe. It should be understood that the second probe is optionally withdrawn while moving the second tool in the second movement direction. It should be understood that the second probe is withdrawn from the second depth to a relatively shallower depth (i.e. relatively more proximal the surface of the first workpiece, for example). The relatively shallower depth is insufficient to provide a welded region between the second workpiece and the second workpiece - rather, a partially and/or unwelded region is instead provided. In one example, withdrawing at least partially the second probe comprises gradually, for example linearly as a function of distance and/or time, withdrawing at least partially the second probe. In one example, withdrawing at least partially the second probe comprises withdrawing the second probe by an amount of at least 50%, preferably at least 75%, more preferably at least 90% of the second depth. In one example, withdrawing at least partially the second probe comprises withdrawing the second probe from the second depth while moving the second tool in the second movement direction.

In one example, the first depth and the second depth are similar, for example the same.

In one example, performing the second pass of FSW comprises fully withdrawing the second probe, thereby resulting in the second exit hole. It should be understood that fully withdrawing the second probe is generally after the second probe has stopped moving in the second direction.

The first tool and the second tool, for example the first probe and the second probe, are mutually opposed i.e. across the joint. That is, the first tool faces the second tool, notwithstanding that the first workpiece and/or the second workpiece are arranged between the first tool and the second tool. In other words, the first tool and the second tool are spaced apart by the first workpiece and/or the second workpiece. In one example, first tool and the second tool are directly mutually opposed. In one example, the first tool and/or the second tool is angled with respect to the first workpiece and/or the second workpiece, wherein the angle is in a range from 15° to 75°, preferably in a range from 30° to 60°, for example 45°. In one example, the first tool and/or the second tool bisect an angle between the first workpiece and the second workpiece. In one example, the first tool and the second tool are mutually opposed, within a range from 1 mm to 50 mm, preferably in a range from 5 mm to 40 mm, more preferably in a range from 10 mm to 30 mm, for example 15 mm, 20 mm or 30 mm. In one example, the first tool and the second tool are mutually opposed, within a range from 1d to 25d, preferably in a range from 2d to 15d, more preferably in a range from 3d to 10d, for example 5d, 7d or 9d, where d is a diameter of the first probe and/or the second probe. In one example, the diameter d of the first probe and/or the second probe is in a range from 2 mm to 50 mm, preferably in a range from 3 mm to 30 mm, more preferably in a range from 4 mm to 5 mm.

Performing the first pass of FSW and performing the second pass of FSW are at least partially concurrent (i.e. quasi concurrent or quasi simultaneous). In this way, respective axial forces applied by the first tool and the second tool on the first workpiece and/or the second workpiece are opposed, as described previously. In one example, the first probe and the second probe are mutually offset in the first movement direction and in the second movement direction, respectively (i.e. along the joint). In one example, the first probe and the second probe are mutually offset, for example by an offset or a displacement along the joint, the first length and/or the second length, so as to avoid collision or interference of the first probe and the second probe. In one example, the offset is in a range from 1 mm to 50 mm, preferably in a range from 5 mm to 40 mm, more preferably in a range from 10 mm to 30 mm, for example 15 mm, 20 mm or 30 mm. In one example, the offset is in a range from 1d to 50d, preferably in a range from 5d to 40d, more preferably in a range from 10d to 30d, for example 15d, 20d or 30d, where d is a diameter of the first probe and/or the second probe. In one example, the first probe and the second probe are mutually spaced apart, for example by a spacing transverse, preferably orthogonal, to the joint, the first length and/or the second length, so as to avoid collision or interference of the first probe and the second probe. Such a transverse spacing may result in an unwelded region and/or partially welded region, for example between the first welded region and the second welded region. Preferably, such an unwelded region and/or partially welded region should be reduced, for example eliminated. In one example, the spacing is in a range from 1 mm to 50 mm, preferably in a range from 5 mm to 40 mm, more preferably in a range from 10 mm to 30 mm, for example 15 mm, 20 mm or 30 mm. In one example, the spacing is in a range from 5% to 100%, preferably in a range from 10% to 75%, more preferably in a range from 15% to 50%, for example 20%, 30% or 40%, of the first depth and/or the second depth. In other words, the first probe and the second probe are not mutually offset, for example by an offset or a displacement along the joint, the first length and/or the second length, but a clash or collision or interference of these probes is avoided by having a central zone between the probe tips that is not welded directly by the probes but which may be in a stirred-up zone and either achieve an acceptable weld or may contain a small region of non-welded material, which is accepted in the design. In one example, the first probe and the second probe are mutually offset, for example by an offset or a displacement along the joint, the first length and/or the second length, as described above, and the first probe and the second probe overlap, for example by an overlap transverse, preferably orthogonal, to the joint, the first length and/or the second length (i.e. a negative spacing), so as to avoid collision or interference of the first probe and the second probe. In one example, the overlap is in a range from 1% to 75%, preferably in a range from 5% to 50%, more preferably in a range from 10% to 40%, for example 20% or 30%, of the first depth and/or the second depth.

In one example, performing the first pass of FSW and performing the second pass of FSW are concurrent, for example, wherein the first probe and the second probe are mutually offset in the first movement direction and in the second movement direction, respectively and/or the first probe and the second probe are mutually spaced apart, for example by a spacing transverse, preferably orthogonal, to the joint, the first length and/or the second length, so as to avoid collision or interference of the first probe and the second probe.

In one example, the first welded region and the second welded region intersect. That is, at least some of first workpiece and/or the second workpiece is FSW by the first probe and the second probe (i.e. by performing the first pass of the FSW and performing the second pass of the FSW). In one example, the first welded region and the second welded region intersect by an amount in a range from 1% to 50%, preferably from 5% to 40%, more preferably in a range from 10% to 30% by volume of the first welded region and/or the second welded region. It should be understood that the volume of the first welded region and/or the second welded region is defined by the volume of the respective stir zone and/or TMAZ.

In other words, the first pass of the FSW and the second pass of the FSW are performed in either a quasi-concurrent manner, for example with a small translational offset to avoid a clash of tools (i.e. probes) or in a concurrent manner such that there is an acceptable level of unwelded and/or partially welded material between the first region and the second region.

In one example, the first movement direction and the second movement direction are the same direction. That is, the first movement direction and the second movement direction are in same direction, for example along the first line and/or the second line, such as between a first entry hole and a first exit hole, a second entry hole and a second exit hole and/or between a first exit hole and a second exit hole, notwithstanding that the first line and the second line may be arcuate and/or linear. In one example, the second movement direction is aligned with the first movement direction. In one example, the second movement direction is aligned with the first movement direction within 30°, preferably within 20°, more preferably within 10°. In one example, the second line is parallel or substantially parallel to the first line. That is, the second movement direction may be well or closely aligned with the first movement direction. In one example, the first movement direction and the second movement direction are mutually aligned.

In one example, the method comprises applying a clamping force on the first workpiece and/or the second workpiece, for example while performing the first pass of FSW and/or the second pass of FSW. In this way, contact between the first workpiece and the second workpiece is better maintained and/or an accuracy and/or precision of the arrangement of the first workpiece and the second workpiece is better preserved. In one example, applying the clamping force on the first workpiece and/or the second workpiece comprises applying the clamping force on the first workpiece and/or the second workpiece using a static (i.e. stationary) support, such as a frame. In one example, applying the clamping force on the first workpiece and/or the second workpiece comprises applying the clamping force on the first workpiece and/or the second workpiece using a dynamic (i.e. moving) support, such as a roller arranged to roll on the first workpiece and/or the second workpiece, for example moving in the first movement direction and/or the same movement direction in line with the first tool and/or the second tool, such as at the same speed. In this way, the dynamic support moves along with the first tool and/or the second tool, for example following a shape of the joint, the first workpiece and/or the second workpiece. Additionally and/or alternatively, the dynamic support enables FSW of long welds, such as on aircraft wings, that would otherwise require similarly-sized static supports. In one example, applying the clamping force on the first workpiece and/or the second workpiece comprises controlling the clamping force on the first workpiece and/or the second workpiece. In this way, a magnitude and/or direction of the clamping force is controlled, such as to account for joint geometry, forces applied by the first tool and/or the second tool and/or size and/or material of the first workpiece and/or the second workpiece.

In one example, the first workpiece comprises a first fillet and performing the first pass of FSW of the joint comprises at least partially inserting the first probe into the first fillet.

In one example, the first rotational direction and the second rotational direction are opposed. In one example, the first rotational direction and the second rotational direction are the same direction.

In one example, performing the second pass of FSW comprises inserting the second probe into the first workpiece, for example, to the second depth, resulting in a second entry hole, moving the second probe in the second movement direction, thereby providing the second welded region, before optionally partially withdrawing the second probe, and then fully withdrawing the second probe, thereby resulting in the second exit hole.

In one example, the first line and the second line are mutually spaced apart, for example by a predetermined spacing, whereby the first welded region and the second welded region at least partially overlap. In one example, the predetermined spacing is at most a first width of the first welded region, a second width of the second welded region and/or a mean of the first width and the second width. It should be understood that the width of the first welded region, for example, a width of the TMAZ transverse, for example orthogonal, to the first line and/or the joint. In one example, the first welded region and the second welded region at least partially overlap by an amount in a range from 10% to 90%, preferably in a range from 20% to 80%, more preferably in a range from 30% to 70 %, most preferably in a range from 40% to 60%, by the first width of the first welded region, the second width of the second welded region and/or the mean of the first width and the second width. In other words, regions of the first workpiece and/or the second workpiece may be welded by the first probe and the second probe.

In one example, the second tool is different from the first tool and preferably, wherein the first rotational direction and the second rotational direction are mutually opposed, preferably wherein the first movement direction and the second movement direction are the same.

In one example, the first tool and/or the second tool comprises a stationary shoulder, as described above. In one example, the first probe comprises and/or is a straight cylindrical probe, a threaded cylindrical probe, a tapered cylindrical probe, a square probe, a triangle probe, a whorl probe, a MX triflute probe, a flared triflute probe, a A-skew probe and/or a re-stir probe. Other probes are known.

In one example, the first tool, for example a shoulder thereof such as a stationary shoulder thereof, comprises a chamfered leading edge, for example having a chamfer or bevel, and/or a radiused trailing edge. In this way, the first pass may provide a radiused fillet weld, thereby reducing stress concentration, for example. In more detail, the chamfered leading edge forges a volume of material of the first workpiece and/or the second workpiece into a chamfered fillet, which is smoothed into a radiused fillet by the radiused trailing edge. Alternatively, the first tool may comprise a chamfered leading edge and/or chamfered trailing edge. The volume of material may be provided by an edge such as a first fillet of the first workpiece and/or the second workpiece. In one example, the chamfered leading edge has a chamfer angle in a range from 15° to 75°, preferably in a range from 30° to 60°, more preferably in a range from 40° to 50°, for example 45°. In one example, the chamfered leading edge has a length in a range from 1 mm to 50 mm, preferably in a range from 5 mm to 30 mm, more preferably in a range from 10 mm to 20 mm, for example 15 mm. In one example, the radiused trailing edge has a radius in a range from 1 mm to 50 mm, preferably in a range from 5 mm to 30 mm, more preferably in a range from 10 mm to 20 mm, for example 15 mm. The second probe may be as described with respect to the first probe, mutatis mutandis.

In one example, the first workpiece and/or the second workpiece comprises an aluminium alloy, for example a 2XXX, a 5XXX, a 6XXX, a 7XXX and/or an 8XXX aluminium alloy, preferably a 2XXX and/or a 7XXX aluminium alloy, a titanium alloy, a copper alloy and/or a steel. That is, the first workpiece and the second workpiece may be similar or dissimilar.

In one example, the first workpiece and/or the second workpiece has a thickness in a range from 0.5 mm to 25 mm, preferably in a range from 1.6 mm to 20 mm, more preferably in a range from 2 mm to 15 mm. For example, the first workpiece may be a skin of an aircraft and the second workpiece may be a spar or a rib.

### Method of manufacturing

The second aspect provides a method of manufacturing a component, preferably an aircraft component, comprising the method of friction-stir welding, FSW, a joint, for example a T joint and/or a lap joint, between a first workpiece and a second workpiece, according to the first aspect.

The FSW, the joint, the first workpiece and/or the second workpiece may be as described with respect to the first aspect.

In one example, the component is an airframe component, for example a fuselage, a wing, an empennage and/or a part thereof.

### Friction-stir welded joint

The third aspect provides a friction-stir welded, FSW, joint, for example a T joint and/or a lap joint, between a first workpiece and a second workpiece, provided according to the method of the first aspect.

The FSW, the joint, the first workpiece and/or the second workpiece may be as described with respect to the first aspect.

### Component

The fourth aspect provides a component, preferably an aircraft component, comprising a friction-stir welded, FSW, joint according to the third aspect.

In one example, the component is an airframe component, for example a fuselage, a wing, an empennage and/or a part thereof.

### Apparatus for friction-stir welding

The fifth aspect provides an apparatus for friction-stir welding, FSW, a joint, preferably a T joint, between a first workpiece and a second workpiece, the apparatus comprising:
a first tool, comprising a first probe rotatable in a first rotational direction and at least partially insertable into the first workpiece and/or into the second workpiece to a first depth, moveable in a first movement direction defining a first line, for performing a first pass of FSW of the joint by moving therealong thereby providing a first welded region; and
a second tool, comprising a second probe rotatable in a first rotational direction and at least partially insertable into the first workpiece and/or into the second workpiece to a second depth, moveable in a second movement direction defining a second line, for performing a second pass of FSW by moving therealong thereby providing a second welded region;
wherein the first tool and the second tool are mutually opposed; and
wherein the apparatus is configured to perform the first pass of FSW and to perform the second pass of FSW are at least partially concurrently.

The FSW, the joint, the first workpiece, the second workpiece, the first tool, the first probe, the first rotational direction, the first depth, the first movement direction, the first line, the first pass of FSW, the first welded region, the second tool, the second probe, the second rotational direction, the second depth, the second movement direction, the second line, the second pass of FSW, and/or the second welded region may be as described with respect to the first aspect.

### Friction-stir welding tool

The sixth aspect provides a friction stir welding, FSW, tool comprising a probe rotatable in a rotational direction, wherein the probe comprises a chamfered leading edge and/or a radiused or chamfered trailing edge.

The FSW tool, the probe, the rotational direction, the chamfered leading edge and/or the radiused trailing edge may be as described with respect to the first aspect.

### Definitions

Throughout this specification, the term "comprising" or "comprises" means including the component(s) specified but not to the exclusion of the presence of other components. The term "consisting essentially of or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

### Brief description of the drawings

For a better understanding of the invention, and to show how exemplary embodiments of the same may be brought into effect, reference will be made, by way of example only, to the accompanying diagrammatic Figures, in which:
Figures 1 to 3 schematically depict a method of friction stir welding;
Figure 4 schematically depicts joint configurations for FSW: (a) square butt; (b) edge butt; (c) T butt joint; (d) lap joint; (e) multiple lap joint; (f) T lap joint; and (g) fillet joint;
Figures 5A, 5B and 5C schematically depict a method of friction stir welding, according to an exemplary embodiment; and
Figure 6 schematically depicts a tool, according to an exemplary embodiment.

### Detailed Description of the Drawings

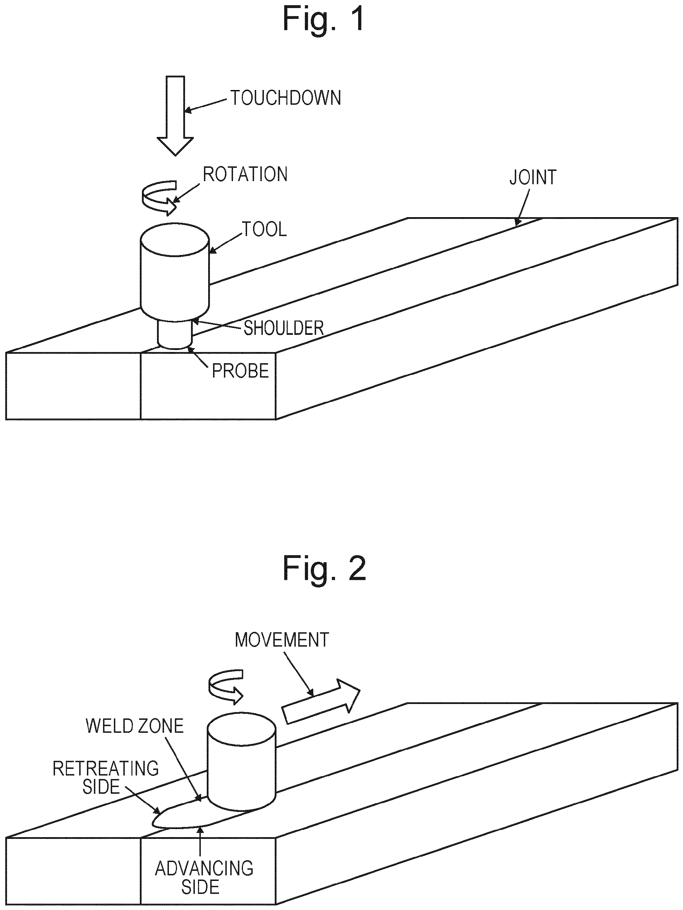

Figures 1 to 3 schematically depict a method of friction stir welding.

As shown in Figure 1, an anticlockwise rotating probe of a FSW tool is inserted at the start (touchdown) into a butt joint between first and second workpieces, to a first depth, such that a shoulder of the tool is in contact with the first and second workpieces.

As shown in Figure 2, the tool is moving in the direction of movement of the tool, as shown, providing a weld zone. An advancing side of the weld is where the direction of movement of the tool, as shown, and the direction of rotation of the probe are in the same general directions. A retreating side of the weld is where the direction of movement of the tool and the direction of rotation of the probe are in the opposite general directions.

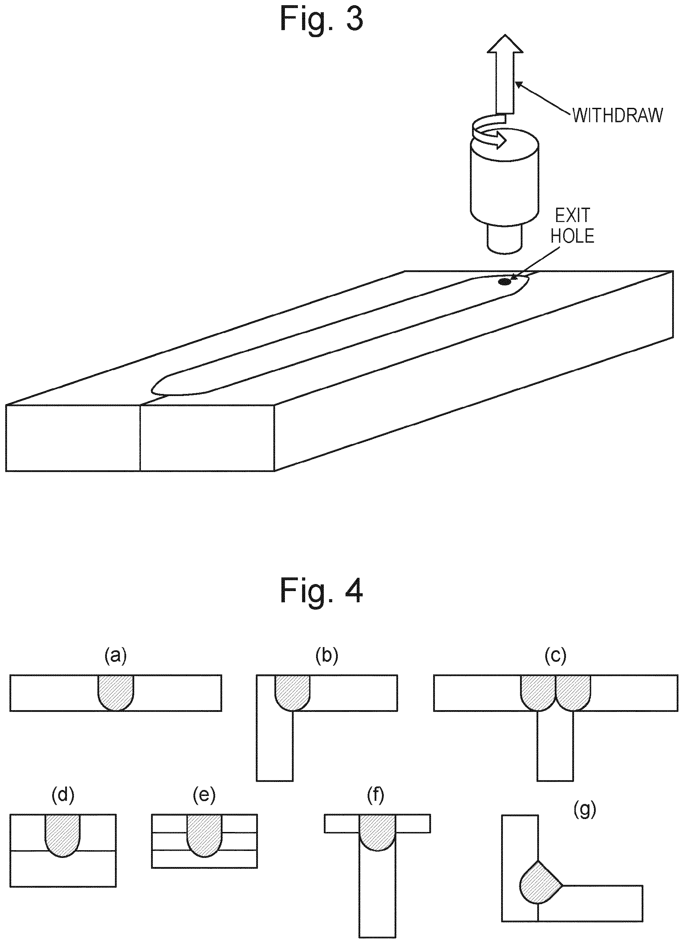

As shown in Figure 3, the tool is withdrawn at the stop, resulting in an exit hole.

Suitable probes for FSW include (a) a straight cylindrical probe; (b) a threaded cylindrical probe; (c) a tapered cylindrical probe; (d) a square probe; (e) a triangle probe; (f) a whorl (TM) probe; (g) a MX triflute (TM) probe; (h) a flared triflute (TM) probe; (i) an A-skew (TM) probe; and (j) a re-stir (TM) probe.

Figure 4 schematically depicts joint configurations for FSW: (a) square butt; (b) edge butt; (c) T butt joint; (d) lap joint; (e) multiple lap joint; (f) T lap joint; and (g) fillet joint.

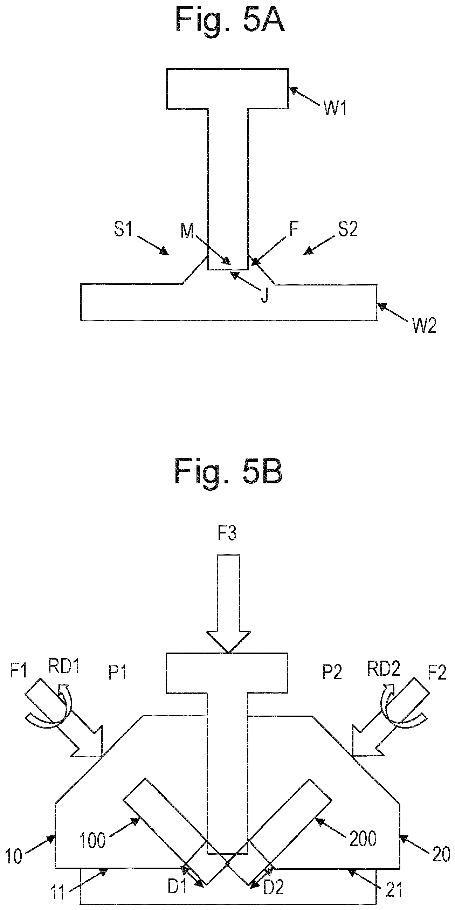

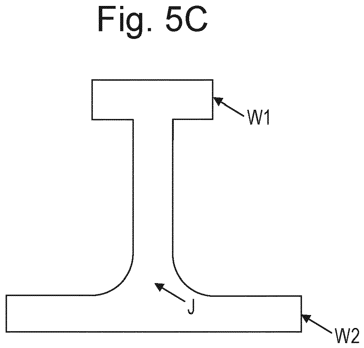

Figures 5A, 5B and 5C schematically depict a method of friction stir welding, according to an exemplary embodiment. Briefly, Figure 5A shows a setup of a joint J before FSW, Figure 5B shows the joint J during FSW and Figure 5C shows the joint J after FSW.

The method is of friction-stir welding, FSW, a joint J, for example a T joint J, between a first workpiece W1 and a second workpiece W2. The method comprises: arranging the first workpiece W1 and the second workpiece W2; performing a first pass P1 of FSW of the joint J by moving therealong a first tool 10, comprising a first probe 100 rotating in a first rotational direction RD1 and at least partially inserted into the first workpiece W1 and/or into the second workpiece W2 to a first depth D1, in a first movement direction MD1 (not shown; for example, into the page) defining a first line L1 (not shown), on a first side S1 of the joint J, thereby providing a first welded region WR1 (not shown); and performing a second pass P2 of FSW of the joint J by moving therealong a second tool 20, comprising a second probe 200 rotating in a second rotational direction RD2 and at least partially inserted into the first workpiece W1 and/or into the second workpiece W2 to a second depth D2, in a second movement direction MD2 (not shown; for example, into the page) defining a second line L2 (now shown), on a second side S2 of the joint J, thereby providing a second welded region WR2 (not shown); wherein the first tool 10 and the second tool 20 are mutually opposed; and wherein performing the first pass P1 of FSW and performing the second pass P2 of FSW are at least partially concurrent.

In this example, the first workpiece W1 is a stringer (having a T-shaped cross-sectional profile) located in a skin, particularly in a rectangular slot (corresponding to a lower end of the stringer) formed therein, the slot having bevelled edges (i.e. a first fillet and a second fillet) extending away therefrom. A pair of stationary shoulder tools (i.e. the first tool 10 and the second tool 20) support the stringer from either side, with friction stir tool pins (i.e. the first probe 100 and the second probe 200) driven through the respective tool shoulders into the bevelled edges of the skin. The first probe 100 and the second probe 200 are mutually offset into the page to avoid a clash but support blocks have sufficient reach to provide local support. Particularly, in the case where the two opposing probes are partially off-set (into/out of the page) so as to avoid a clash of the pins then the probe on one side of the joint is "opposed" by the block on the other and so the blocks must have sufficient length (in and out of the page) to provide this support. This is what is meant by "reach".

In this example, the joint J is a T joint. In this example, a position of the FSW, for example of the first pass P1 of FSW and/or of the second pass P2 of FSW, is flat.

In this example, the method comprises providing the first workpiece W1 and the second workpiece W2. In this example, providing the first workpiece W1 comprises including, by machining, a male member M (e.g. a tongue) therein and providing the second workpiece W2 comprises including, by machining, a corresponding female member F (e.g. a groove or rebate) therein. In this example, arranging the first workpiece W1 and the second workpiece W2 comprises receiving the male member M in the female member F.

In this example the first workpiece W1 comprises a male member M and the second workpiece W2 comprises a corresponding female member F and arranging the first workpiece W1 and the second workpiece W2 comprises receiving the male member M in the female member F.

In this example, the first rotational direction RD1 is anticlockwise, as viewed from above the first tool 10. In this example, the first movement direction MD1 is a first translational direction. In this example, the first line L1 is or linear. In this example, the first line L1 is parallel to the joint J.

In this example, performing the first pass P1 of FSW comprises inserting the first probe 100 to the first depth D1, resulting in a first entry hole ENH1 (not shown). In this example, the method comprises moving the first tool 10 in the first movement direction MD1 from the first entry hole ENH1 towards and/or to a first exit hole EXH1 (not shown), for example at a first speed, while applying a first axial force F1.

In this example, performing the first pass P1 of FSW comprises withdrawing at least partially the first probe 100. In this example, withdrawing at least partially the first probe 100 comprises gradually, for example linearly as a function of distance and/or time, withdrawing at least partially the first probe 100. In this example, withdrawing at least partially the first probe 100 comprises withdrawing the first probe 100 by an amount of at least 50%, preferably at least 75%, more preferably at least 90% of the first depth D1. In this example, withdrawing at least partially the first probe 100 comprises withdrawing the first probe 100 from the first depth D1 while moving the first tool 10 in the first movement direction MD1. In this example, performing the first pass P1 of FSW comprises fully withdrawing the first probe 100, thereby resulting in the first exit hole EXH1.

In this example, performing the first pass P1 of FSW comprises inserting the first probe 100 into the first workpiece W1, for example, to the first depth D1, resulting in a first entry hole ENH1, moving the first probe 100 in the first movement direction MD1, thereby providing the first welded region WR1 including 'healing' the first entry hole ENH1, and then fully withdrawing the first probe 100, thereby resulting in a first exit hole EXH1.

In this example, the second line L2 is parallel to the joint J. In this example, the second line L2 is parallel to the first line L1. In this example, the first line L1 and the second line L2 are mutually spaced apart.

In this example, the second rotational direction RD2 is clockwise, as viewed from above the second tool 20. In this example, the second movement direction MD2 is a second translational direction. In this example, the second line L2 is linear. In this example, the first rotational direction RD1 and the second rotational direction RD2 are the same rotational direction, for example both anticlockwise.

In this example, performing the second pass P2 of FSW comprises inserting the second probe 200 to the second depth D2, thereby providing the second welded region WR2. In this example, the seconded welded region extends along a first distance of the second line L2. In this example, the first distance of the second line L2 extends fully along the first distance of the first line L1.

In this example, inserting the second probe 200 to the second depth D2 results in a second entry hole ENH2. In this example, the method comprises moving the second tool 20 in the second movement direction MD2 from the second entry hole ENH2 towards and/or to a second exit hole EXH2, for example at a second speed, while applying a second axial force F2. In this example, the second speed is equal to the first speed.

In this example, performing the second pass P2 of FSW comprises optionally withdrawing at least partially the second probe 200. In this example, withdrawing at least partially the second probe 200 comprises gradually, for example linearly as a function of distance and/or time, withdrawing at least partially the second probe 200. In this example, withdrawing at least partially the second probe 200 comprises withdrawing the second probe 200 by an amount of at least 50%, preferably at least 75%, more preferably at least 90% of the second depth D2. In this example, withdrawing at least partially the second probe 200 comprises withdrawing the second probe 200 from the second depth D2 while moving the second tool 20 in the second movement direction MD2.

In this example, the first depth D1 and the second depth D2 are similar, for example the same.

In this example, performing the second pass P2 of FSW comprises fully withdrawing the second probe 200, thereby resulting in the second exit hole EXH2.

In this example, the first probe 100 and the second probe 200 are mutually offset in the first movement direction MD1 and in the second movement direction MD2, respectively. In this example, the first probe 100 and the second probe 200 are mutually offset, for example by an offset or a displacement along the joint J, the first length and/or the second length, so as to avoid collision or interference of the first probe 100 and the second probe 200. In this example, the offset is in a range from 1 mm to 50 mm.

In this example, performing the first pass P1 of FSW and performing the second pass P2 of FSW are concurrent, for example, wherein the first probe 100 and the second probe 200 are mutually offset in the first movement direction MD1 and in the second movement direction MD2, respectively, so as to avoid collision or interference of the first probe 100 and the second probe 200.

In this example, the first welded region WR1 and the second welded region WR2 intersect. In this example, the first welded region WR1 and the second welded region WR2 intersect by an amount in a range from 1% to 50%.

In this example, the first movement direction MD1 and the second movement direction MD2 are the same direction. In this example, the first movement direction MD1 and the second movement direction MD2 are mutually aligned.

In this example, the first workpiece W1 comprises a first fillet and performing the first pass P1 of FSW of the joint J comprises at least partially inserting the first probe 100 into the first fillet.

In this example, performing the second pass P2 of FSW comprises inserting the second probe 200 into the first workpiece W1, for example, to the second depth D2, resulting in a second entry hole ENH2, moving the second probe 200 in the second movement direction MD2, thereby providing the second welded region WR2, before optionally partially withdrawing the second probe 200, and then fully withdrawing the second probe 200, thereby resulting in the second exit hole EXH2.

In this example, the first line L1 and the second line L2 are mutually spaced apart, for example by a predetermined spacing, whereby the first welded region WR1 and the second welded region WR2 at least partially overlap. In this example, the predetermined spacing is at most a first width of the first welded region WR1, a second width of the second welded region WR2 and/or a mean of the first width and the second width. In this example, the first welded region WR1 and the second welded region WR2 at least partially overlap by an amount in a range from 10% to 90% by the first width of the first welded region WR1, the second width of the second welded region WR2 and/or the mean of the first width and the second width.

In this example, the first tool 10 and the second tool 20 is angled with respect to the first workpiece W1 and the second workpiece W2, wherein the angle is about 45°. In this example, the first tool 10 and the second tool 20 bisect an angle between the first workpiece W1 and the second workpiece W2.

In this example, the method comprises applying a clamping force F3 on the first workpiece W1 and/or the second workpiece W2, for example while performing the first pass of FSW and/or the second pass of FSW. In this example, applying the clamping force F3 on the first workpiece W1 and/or the second workpiece W2 comprises applying the clamping force F3 on the first workpiece W1 and/or the second workpiece W2 using a dynamic (i.e. moving) support, such as a roller arranged to roll on the first workpiece W1, for example moving in the first movement direction MD1 and/or the same movement direction in line with the first tool 10 and/or the second tool 20, such as at the same speed.

In this example, the first tool 10 and/or the second tool 20 comprises a stationary shoulder, as described above. In this example, the first probe 100 comprises and/or is a straight cylindrical probe, a threaded cylindrical probe, a tapered cylindrical probe, a square probe, a triangle probe, a whorl probe, a MX triflute probe, a flared triflute probe, a A-skew probe and/or a re-stir probe. Other probes are known.

In this example, the first workpiece W1 and the second workpiece W2 comprises a 2XXX aluminium alloy.

In this example, the first workpiece W1 and/or the second workpiece W2 has a thickness in a range from 0.5 mm to 25 mm, preferably in a range from 1.6 mm to 20 mm, more preferably in a range from 2 mm to 15 mm. In this example, the first workpiece W1 is a skin of an aircraft and the second workpiece W2 is a spar or a rib.

Figures 5A, 5B and 5C also schematically depict an apparatus for friction stir welding, according to an exemplary embodiment.

The apparatus is for friction-stir welding, FSW, a joint J, preferably a T joint J, between a first workpiece W1 and a second workpiece W2, the apparatus comprising:
a first tool 10, comprising a first probe 100 rotatable in a first rotational direction RD1 and at least partially insertable into the first workpiece W1 and/or into the second workpiece W2 to a first depth D1, moveable in a first movement direction MD1 defining a first line L1, for performing a first pass P1 of FSW of the joint J by moving therealong thereby providing a first welded region WR1; and
a second tool 20, comprising a second probe 200 rotatable in a first rotational direction RD1 and at least partially insertable into the first workpiece W1 and/or into the second workpiece W2 to a second depth D2, moveable in a second movement direction MD2 defining a second line L2, for performing a second pass P2 of FSW by moving therealong thereby providing a second welded region WR2;
wherein the first tool 10 and the second tool 20 are mutually opposed; and
wherein the apparatus is configured to perform the first pass P1 of FSW and to perform the second pass P2 of FSW are at least partially concurrently.

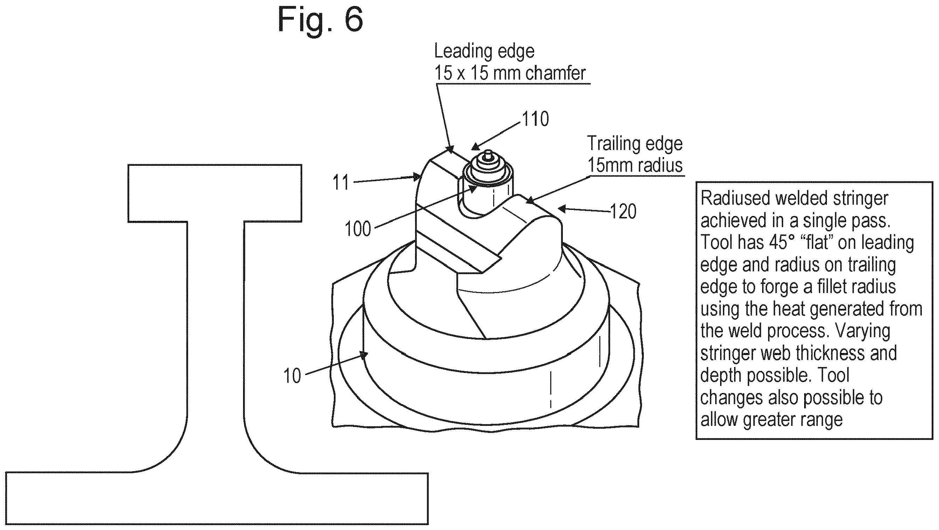

Figure 6 schematically depicts a tool, for example the first tool 10 and/or the second tool 20, according to an exemplary embodiment.

In this example, the tool 10 comprises a stationary shoulder 11.

In this example, the stationary shoulder 11 comprises a chamfered leading edge 110 and a radiused trailing edge 120. In this example, the chamfered leading edge 110 has a chamfer angle of 45°. In this example, the chamfered leading edge 110 has a length of 15 mm x 15 mm. In this example, the radiused trailing edge 120 has a radius of 15 mm.

Although a preferred embodiment has been shown and described, it will be appreciated by those skilled in the art that various changes and modifications might be made without departing from the scope of the invention, as defined in the appended claims and as described above.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at most some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A method of friction-stir welding, FSW, a joint, for example a T joint, between a first workpiece and a second workpiece, the method comprising:
arranging the first workpiece and the second workpiece;
performing a first pass of FSW of the joint by moving therealong a first tool, comprising a first probe rotating in a first rotational direction and at least partially inserted into the first workpiece and/or into the second workpiece to a first depth, in a first movement direction defining a first line, on a first side of the joint, thereby providing a first welded region; and
performing a second pass of FSW of the joint by moving therealong a second tool, comprising a second probe rotating in a second rotational direction and at least partially inserted into the first workpiece and/or into the second workpiece to a second depth, in a second movement direction defining a second line, on a second side of the joint, thereby providing a second welded region;
wherein the first tool and the second tool are mutually opposed; and
wherein performing the first pass of FSW and performing the second pass of FSW are at least partially concurrent.

2. The method according to claim 1, wherein performing the first pass of FSW and performing the second pass of FSW are concurrent.

3. The method according to any previous claim, wherein the first movement direction and the second movement direction are mutually aligned.

4. The method according to any previous claim, wherein the first tool and the second tool are mutually offset in the first movement direction and in the second movement direction, respectively and/or wherein the first probe and the second probe are mutually spaced apart, for example by a spacing transverse, preferably orthogonal, to the joint, the first length and/or the second length, so as to avoid collision or interference of the first probe and the second probe.

5. The method according to any previous claim, wherein the first workpiece comprises a male member, wherein the second workpiece comprises a corresponding female member and wherein arranging the first workpiece and the second workpiece comprises receiving the male member in the female member.

6. The method according to any previous claim, wherein the first workpiece comprises a first fillet and wherein performing the first pass of FSW of the joint comprises at least partially inserting the first probe into the first fillet.

7. The method according to any previous claim, wherein the first rotational direction and the second rotational direction are opposed.

8. The method according to any previous claim, wherein the first line and the second line are mutually spaced apart.

9. The method according to any previous claim, comprising applying a clamping force on the first workpiece and/or the second workpiece, for example while performing the first pass of FSW and/or the second pass of FSW.

10. The method according to any previous claim, wherein the first tool and/or the second tool comprises a stationary shoulder and/or wherein the first probe comprises a chamfered leading edge and/or a radiused trailing edge.

11. The method according to any previous claim, wherein the first workpiece and/or the second workpiece comprises an aluminium alloy, for example a 2XXX, a 5XXX, a 6XXX, a 7XXX and/or an 8XXX aluminium alloy, preferably a 2XXX and/or a 7XXX aluminium alloy, a titanium alloy, a copper alloy and/or a steel.

12. The method according to any previous claim, wherein the first workpiece and/or the second workpiece has a thickness in a range from 0.5 mm to 25 mm, preferably in a range from 1.6 mm to 20 mm, more preferably in a range from 2 mm to 15 mm.

13. A method of manufacturing a component, preferably an aircraft component, comprising the method of friction-stir welding, FSW, a joint, for example a T joint, between a first workpiece and a second workpiece, according to any previous claim.

14. A friction-stir welded, FSW, joint, for example a T joint, between a first workpiece and a second workpiece, provided according to the method of any of claims 1 to 13.

15. An apparatus for friction-stir welding, FSW, a joint, preferably a T joint, between a first workpiece and a second workpiece, the apparatus comprising:
a first tool, comprising a first probe rotatable in a first rotational direction and at least partially insertable into the first workpiece and/or into the second workpiece to a first depth, moveable in a first movement direction defining a first line, for performing a first pass of FSW of the joint by moving therealong thereby providing a first welded region; and
a second tool, comprising a second probe rotatable in a first rotational direction and at least partially insertable into the first workpiece and/or into the second workpiece to a second depth, moveable in a second movement direction defining a second line, for performing a second pass of FSW by moving therealong thereby providing a second welded region;
wherein the first tool and the second tool are mutually opposed; and
wherein the apparatus is configured to perform the first pass of FSW and to perform the second pass of FSW are at least partially concurrently.
